# EUROPÄISCHE PATENTSCHRIFT

(11) **EP 1 370 432 B1**
(45) Veröffentlichungstag und Bekanntmachung des Hinweises auf die Patenterteilung: **15.10.2008**
(21) Anmeldenummer: 02722239.7
(22) Anmeldetag: 19.03.2002
(51) Int. Cl.: B60G 9/00, B60B 35/08

(54) **ACHSAGGREGAT**
AXLE ASSEMBLY
SYSTEME D'ESSIEU

(30) Priorität: 21.03.2001 DE 10113674; 14.04.2001 DE 10118523
(43) Veröffentlichungstag der Anmeldung: 17.12.2003
(73) Patentinhaber: SAF-HOLLAND GmbH, 63856 Bessenbach-Keilberg (DE)
(72) Erfinder: DANTELE, Johann, 97525 Schwebheim (DE)
(74) Vertreter: KEIL & SCHAAFHAUSEN Patentanwälte
(86) Internationale Anmeldenummer: PCT/EP2002/003002
(87) Internationale Veröffentlichungsnummer: WO 2002/074563

(56) Entgegenhaltungen:
- EP-A- 0 296 568
- GB-A- 2 355 698
- US-A- 5 690 353

## Beschreibung

Die Erfindung betrifft ein Achsaggregat mit einer einen starren, z. B. als Achsrohr ausgebildeten Achskörper aufweisenden Fahrzeugachse, mit je einem Führungslenker beidseits der Fahrzeuglängsmittelebene, welcher an einem ersten vorderen Ende an einem chassisfesten Lagerpunkt anlenkbar und davon beabstandet starr mit dem Achskörper verbunden ist, und welcher im Bereich seines dem ersten Ende gegenüberliegenden hinteren Endes das untere Auflager eines Federelements bildet, auf dessen Oberseite sich das Fahrzeugchassis abstützt.

Ein derartiges Achsaggregats ist beispielsweise aus der EP-A-0 806 311 der US 56 90353 oder der EP-A-0 830 960 bekannt. Als Achskörper kann z. B. ein besonderes Achsrohr eingesetzt werden, dessen Querschnitt oder Wandstärke im Bereich der Verbindung mit den gesonderten Führungslenkern beispielsweise durch einen Stauchvorgang vergrößert ist. Die Führungslenker sind einzelne im Wesentlichen kastenförmig mit senkrechten Seitenwänden und Boden- oder Deckenwänden ausgebildet, die miteinander verschweißt sind. Die starre Verbindung der Führungslenker mit dem Achskörper ist durch zumindest bereichsweise umlaufende Schweißungen vorgesehen, welche hohe Präzision bei der Fertigung erfordern und im Einsatz starken Belastungen ausgesetzt sind.

Aufgabe der vorliegenden Erfindung ist es, ein Achsaggregat der eingangs genannten Art so weiterzubilden, dass der Herstellungs- und Montageaufwand sowie das Gewicht bei geringen Fertigungskosten weiter reduziert werden, ohne die Zuverlässigkeit und Stabilität des Achsaggregats zu verringern.

Diese Aufgabe wird erfindungsgemäß bei einem Achsaggregat der eingangs genannten Art dadurch gelöst, dass der Achskörper und die beiden Führungslenker gemeinsam aus zwei jeweils im Wesentlichen einstückigen und miteinander entlang einer z.B. im Wesentliche horizontal verlaufenden Trennfuge verbundenen, insbesondere verschweißten, Formteilhälften bestehen, so dass der Achskörper die beiden Führungslenker starr miteinander verbindet. Die obere Achskörperhälfte und die untere Achskörperhälfte sind hierbei also je im Wesentlichen einstückig mit zwei oberen Führungslenkerhälften bzw. zwei unteren Führungslenkerhälften verbunden, welche sich gegenseitig ergänzen.

Derartige schalenartige Formteilhälften lassen sich mit geeigneten Press- oder Schmiedevorrichtungen mit geringem Aufwand in großen Stückzahlen aus Blech kostengünstig herstellen. Ein Verspannen oder Verschweißen gesonderter Führungslenker z.B. mit dem Achskörper und auch das arbeitsintensive Zusammenfügen der Führungslenker aus mehreren Wandelementen, wie es nach dem Stand der Technik erforderlich ist, kann entfallen. Eine Schweißung ist lediglich zum Verbinden der beiden Formteilhälften im Bereich der z. B. im Wesentlichen horizontal verlaufenden Trennfuge erforderlich, in welcher die Belastungen geringer sind. Zudem ermöglicht das Formpressen der Formteilhälften eine gewichts- und belastungsoptimierte Wandstärkenverteilung in dem Achsaggregat. So ist es beispielsweise möglich, in dem hochbelasteten Bereich der Verbindung der Führungslenker mit dem Achskörper die Materialstärke zu erhöhen und in weniger belasteten Bereichen entsprechend zu verringern. Das erfindungsgemäße Achsaggregat erhält dadurch eine hohe Steifigkeit bei gleichzeitig niedrigem Gewicht.

Die Steifigkeit des Achsaggregats kann bei geringem Gewicht dadurch weiter gesteigert werden, dass die beiden Formteilhälften miteinander verbunden einen Hohlraum zwischen sich bilden. Biege- und Torsionsmomente, die auf das Achsaggregat wirken, lassen sich bei dieser Kastenbauweise besonders gut auffangen.

Werden an den vorderen Enden der Führungslenker jeweils eine Lagermuffe zur Verbindung der Führungslenker mit dem Fahrzeugchassis ausgebildet oder angebracht, ist es möglich individuell auf das Fahrzeugchassis abgestimmte Lagermuffen bei gleichbleibender Geometrie des Achsaggregats einzusetzen. Weiter lassen sich auf diese Weise auch unterschiedliche Werkstoffe für die Lagermuffen und die Formteilhälften verwenden, beispielsweise Lagermuffen aus Kupferlegierungen. Die Lagermuffen können durch eine Schweißverbindung besonders einfach und haltbar an den Führungslenkern befestigt sein, wodurch gleichzeitig die Stabilität des Achsaggregats erhöht wird.

Das erfindungsgemäße Achsaggregat ist bei verschiedenen Fahrzeugchassistypen einsetzbar, wenn an den hinteren Enden der Führungslenker jeweils mehrere im Wesentlichen senkrecht zu der Ebene der Trennfuge verlaufende Durchgangsbohrungen vorgesehen sind, um Federelemente an den Führungslenkern zu befestigen. In Abhängigkeit der Größe der Federelemente, die vorzugsweise durch je einen Luftfederbalg gebildet sind, und der Geometrie des Fahrzeugchassis werden die Federelemente in unterschiedlichen Durchgangsbohrungen über beispielsweise einen Gewindezapfen befestigt. Durch die breite Verwendbarkeit des Achsaggregats bei unterschiedlichen Fahrzeugchassistypen können die Fertigungskosten und insbesondere die Kosten für die Formwerkzeuge der Formteilhälften gering gehalten werden. Die Stoßdämpferanbindung kann in an sich bekannter Weise erfolgen.

Um eine Bremse, wie beispielsweise eine Festsattelscheibenbremse, platzsparend und geschützt anordnen zu können, ist nach einer bevorzugten Ausführungsform der Erfindung in den Führungslenkern zwischen dem mit dem Achskörper verbundenen Bereich und dem vorderen Ende jeweils eine Durchgangsöffnung vorgesehen. In dieser Durchgangsöffnung können Funktionselemente einer Bremsanlage untergebracht werden, ohne den Bauraum im Bereich der Radaufhängung unnötig zu vergrößern. Die Stabilität des Achsaggregats kann dabei weiter gesteigert werden, indem in die Durchgangsöffnung eine ringförmige Wandung eingesetzt und mit den Formteilhälften verschweißt wird.

Zur Verbindung "von Rädern mit dem Achsaggregat ist vorzugsweise in beiden Seitenöffnungen des Achskörpers jeweils ein Achszapfen starr befestigt. Dieser Achszapfen kann beispielsweise in den als Achsrohr ausgebildeten Achskörper eingepresst und ggf. mit diesem verschweißt oder in sonstiger Weise mit dem Achsaggregat verbunden werden. Auf diese Weise ist es möglich, unterschiedlich dimensionierte Achszapfen bei gleicher Achsaggregatsgeometrie einzusetzen.

Nach einer anderen Ausführungsform der Erfindung sind in beiden Seitenöffnungen des Achskörpers Wälzlager vorgesehen. Die Räder können bei dieser Ausführungsform über eine Verlängerung der Radnabe in der Lagereinheit in dem Achskörper aufgenommen werden. Auch bei dieser Ausgestaltung des Achsaggregats ist die Gestaltung der Räder oder der Bremse weitgehend unabhängig von der Geometrie des Achsaggregats, so dass dieses variabel für unterschiedliche Fahrzeugtypen einsetzbar ist.

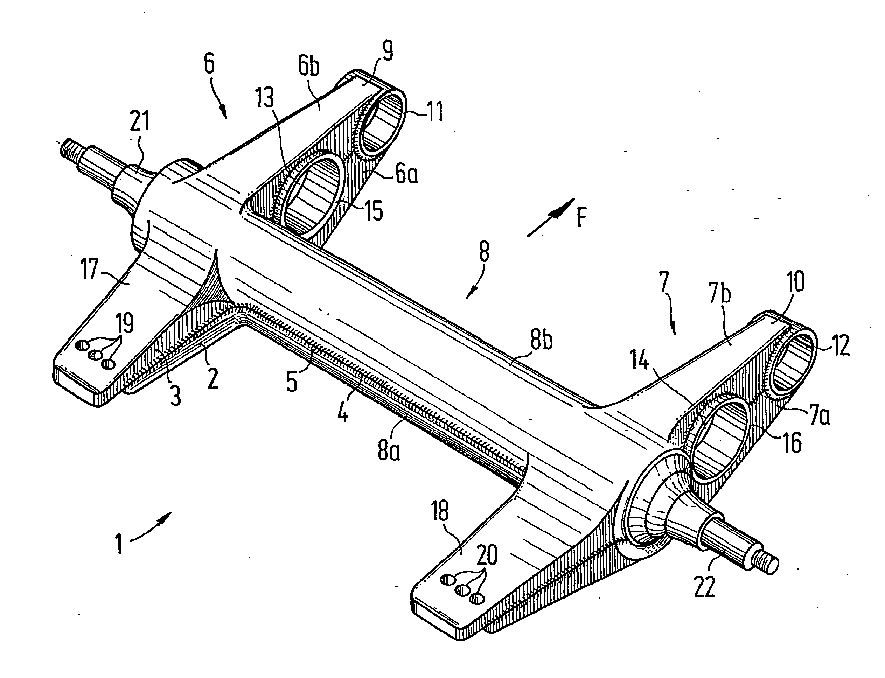

Im Folgenden, wird eine Ausführungsform der Erfindung beispielhaft und unter Bezugnahme auf die Zeichnung erläutert. Die einzige Figur zeigt eine erfindungsgemäßes Achsaggregat in schematischer Perspektivansicht.

Das Achsaggregat 1 ist aus einer in der Figur unteren Formteilhälfte 2 und einer oberen Formteilhälfte 3 zusammengesetzt. Entlang einer im Wesentlichen horizontal verlaufenden Trennfuge 4 sind die beiden Formteilhälften 2 und 3 miteinander über eine Schweißung 5 verbunden und definieren zwischen sich einen Hohlraum. Die beiden Formteilhälften 2 und 3 sind jeweils aus Blech gepresste oder geschmiedete Profile, die eine Wandstärke von einigen Zentimetern, beispielsweise etwa 5 mm aufweisen können.

Jede der Formteilhälften 2 und 3 ist H-förmig ausgebildet mit zwei im Wesentlichen zueinander parallelen Führungslenkerhälften 6a und 7a bzw. 6b und 7b. Die Führungslenkerhälften 6a, 6b; 7a, 7b sind jeweils über Achskörperhälften 8a bzw. 8b miteinander einstückig so verbunden, dass die Achskörperhälften 8a, 8b annähernd senkrecht zu den Führungslenkerhälften 6a, 6b; 7a, 7b verlaufen. Die Führungslenkerhälften 6a, 6b; 7a, 7b bilden zusammengesetzt jeweils Führungslenker 6 bzw. 7, in deren mittleren Bereich der aus den Achskörperhälften 8a, 8b zusammengesetzte Achskörper 8 in Form eines Achsrohres abzweigt. In der gezeigten Ausführungsform weist das Achsrohr 8 einen Durchmesser von etwa 200 mm auf.

Das jeweils in der durch Pfeil F gekennzeichneten Fahrtrichtung vordere Ende 9 bzw. 10 der Führungslenker 6 und 7 ist an einem Lagerpunkt am Fahrzeugchassis (in der Figur nicht dargestellt) anlenkbar. Hierzu ist in den vorderen Enden 9, 10 der Führungslenker 6, 7 jeweils eine Lagermuffe 11 bzw. 12 ausgebildet oder angeordnet. In der in der Figur dargestellten Ausführungsform weist hierzu das vordere Ende 9 bzw. 10 der Führungslenker 6 und 7 jeweils eine halbzylindrische Ausnehmung auf, in welche die ringförmige Lagermuffe 11 bzw. 12 umlaufend eingeschweißt ist. Die Lagermuffen 11 und 12 selbst können innen beispielsweise mit einer Kupferlegierung beschichtet sein oder insgesamt aus einer Legierung mit guten Lagereigenschaften bestehen.

Zwischen den Lagermuffen 11 und 12 und den Abzweigungen des Achskörpers 8 ist in jedem Führungslenker 6 bzw. 7 eine Durchgangsöffnung 13, 14 vorgesehen, in die zur Steigerung der Stabilität des Achsaggregats 1 jeweils ringförmige Wandungen 15, 16 eingschweißt sind. In diesen Durchgangsöffnungen 13, 14 können im Einbauzustand des Achsaggregats 1 Funktionselemente einer Bremsanlage (nicht dargestellt) achsnah aufgenommen sein. Die Kontur der Durchgangsöffnungen 13 und 14 sowie der darin eingesetzten Wandungen 15 und 16 ist dabei nicht auf eine Kreisform beschränkt, vielmehr können in Abhängigkeit der Dimensionierung und Gestaltung der Bremsanlage auch elliptische oder beliebige andere Geometrien realisiert werden.

In den bezüglich der Fahrtrichtung F hinteren abgeflachten Enden 17, 18 der Führungslenker 6, 7 sind drei senkrecht zur vertikalen Fahrzeugmittellängsebene zueinander versetzte Durchgangsbohrungen 19 bzw. 20 vorgesehen. Mittels Gewindezapfen können in jeweils einem oder mehreren der Durchgangsbohrungen 19, 20 Federelemente (nicht dargestellt) an den Führungslenkern 6 bzw. 7 befestigt werden, so dass die hinteren Enden 17, 18 der Führungslenker 6, 7 Auflager für diese Federelemente, wie beispielsweise einen Luftfederbalg, bilden. Auf der Oberseite der Federelemente stützt sich dann seinerseits das Fahrzeugchassis ab. Durch das Vorsehen mehrerer Durchgangsbohrungen 19, 20 in den Führungslenkern 6 und 7 ist es möglich, die Federelemente in Abhängigkeit der Abmessungen des Fahrzeugchassis in unterschiedlichen Abständen von der senkrechten Fahrzeuglängsmittelebene zu befestigen.

In der in der Figur dargestellten Ausführungsform sind in die beiden einander gegenüberliegenden Seitenöffnungen des Achskörpers 8 Achszapfen 21 und 22 aufgenommen und in der Achsrohröffnung verpresst und/oder verschweißt. Auf den Achszapfen 21 und 22 können in bekannter Weise jeweils ein oder mehrere Räder (nicht dargestellt) aufgenommen werden. Hierzu weisen die Achszapfen 21, 22 an ihren nach außen gewandten Enden jeweils Gewindeabschnitte auf.

Nach einer alternativen Ausführungsform ist es auch möglich statt der in der Figur gezeigten Achszapfen 21 und 22 in dem Achskörper 8 Wälzlager anzuordnen, mit denen Radnaben drehbar gelagert werden können, wobei der äußere Lagerring fest mit dem Achskörper 8 verbunden ist.

### Bezugszeichenliste

- 1: Achsaggregat
- 2: untere Formteilhälfte
- 3: obere Formteilhälfte
- 4: Trennfuge
- 5: Schweißung
- 6: Führungslenker
- 7: Führungslenker
- 8: Achskörper (Achsrohr)
- 9: vorderes Ende des Führungslenkers 6
- 10: vorderes Ende des Führungslenkers 7
- 11: Lagermuffe
- 12: Lagermuffe
- 13: Durchgangsöffnung
- 14: Durchgangsöffnung
- 15: ringförmige Wandung
- 16: ringförmige Wandung
- 17: hinteres Ende des Führungslenkers 6
- 18: hinteres Ende des Führungslenkers 7
- 19: Durchgangsbohrungen
- 20: Durchgangsbohrungen
- 21: Achszapfen
- 22: Achszapfen

- F: Fahrtrichtung

## Patentansprüche

1. Achsaggregat mit einer einen starren z. B. als Achsrohr (8) ausgebildeten Achskörper aufweisenden Fahrzeugachse, mit je einem Führungslenker (6, 7) beidseits der Fahrzeuglängsmittelebene, welcher an einem ersten vorderen Ende (9, 10) an einem chassisfesten Lagerpunkt anlenkbar und davon beabstandet starr mit dem Achskörper (8) verbunden ist, und welcher im Bereich seines dem ersten Ende (9, 10) gegenüberliegenden hinteren Endes (17, 18) das untere Auflager eines Federelements bildet, auf dessen Oberseite sich das Fahrzeugchassis abstützt, **dadurch gekennzeichnet, dass** der Achskörper (8) und die beiden Führungslenker (6, 7) gemeinsam aus zwei jeweils im Wesentlichen einstückigen und miteinander entlang einer z.B. im Wesentlichen horizontalen Ebene verlaufenden Trennfuge (4) verbundenen, insbesondere verschweißten, Formteilhälften (2, 3) gebildet sind, so dass der Achskörper (8) die beiden Führungslenker (6, 7) starr miteinander verbindet.

2. Achsaggregat nach Anspruch 1, **dadurch gekennzeichnet, dass** die beiden Formteilhälften (2, 3) miteinander verbunden einen Hohlraum zwischen sich bilden.

3. Achsaggregat nach Anspruch 1 oder 2, **dadurch gekennzeichnet, dass** an den vorderen Enden (9, 10) der Führungslenker (6, 7) jeweils eine Lagermuffe (11, 12) zur Verbindung der Führungslenker (6, 7) mit dem Fahrzeugchassis ausgebildet oder angebracht, insbesondere angeschweißt, ist.

4. Achsaggregat nach einem der Ansprüche 1 bis 3, **dadurch gekennzeichnet, dass** an den hinteren Enden (17, 18) der Führungslenker (6, 7) jeweils mehrere im Wesentlichen senkrecht zur Trennebene der Formteilhälften (2, 3)verlaufende Durchgangsbohrungen (19, 20) vorgesehen sind, um Federelemente, insbesondere je einen Luftfederbalg, an den Führungslenkern (6, 7) zu befestigen.

5. Achsaggregat nach einem der Ansprüche 1 bis 4, **dadurch gekennzeichnet, dass** in den Führungslenkern (6, 7) zwischen dem mit dem Achskörper (8) verbundenen Bereich und dem vorderen Ende (9, 10) jeweils eine Durchgangsöffnung (13, 14) vorgesehen ist.

6. Achsaggregat nach einem der Ansprüche 1 bis 5, **dadurch gekennzeichnet, dass** in beiden Seitenöffnungen des Achskörpers (8) jeweils ein Achszapfen (21, 22) starr befestigt ist.

7. Achsaggregat nach einem der Ansprüche 1 bis 5, **dadurch gekennzeichnet, dass** in beiden Seitenöffnungen des Achskörpers (8) Wälzlager für die Aufnahme eines Radnabenteils vorgesehen sind.

## Claims

1. An axle assembly comprising a vehicle axle having an axle body (8) that is rigid and that is provided, for example, in the form of an axle tube, having one radius arm (6, 7) each on both sides of the vehicle's longitudinal median plane which, at a first front end (9, 10) can be articulated on a bearing point fixed on the chassis and which, at a distance therefrom, is rigidly joined to the axle body (8) and which forms, in the region of its rear end (17, 18) that is opposite the first end (9, 10), the lower support of a spring element on whose upper side the vehicle chassis is supported, **characterized in that** the axle body (8) and both radius arms (6, 7) are formed together from two essentially one-piece shaped part halves which are joined, in particular welded, to one another along a parting line (4) which extends along an e.g. essentially horizontal plane, so that the axle body (8) rigidly joins both radius arms (6, 7) to one another.

2. The axle assembly according to claim 1, **characterized in that** the two shaped part halves (2, 3) when joined, form a hollow space between them.

3. The axle assembly according to claim 1 or 2, **characterized in that** a bearing sleeve (11, 12) each is formed or attached, in particular welded, to the front ends (9, 10) of the radius arms (6, 7) to connect the radius arms (6, 7) with the vehicle chassis.

4. The axle assembly according to any one of the claims 1 to 3, **characterized in that** several through bores (19, 20) that extend essentially at a right angle to the parting plane of the shaped part halves (2, 3) are provided on each of the rear ends (17, 18) of the radius arms (6, 7), in order to fasten spring elements, in particular a pneumatic spring bellows each, to the radius arms (6, 7).

5. The axle assembly according to any one of the claims 1 to 4, **characterized in that** a through hole (13, 14) each is provided in the radius arms (6, 7) between the region connected with the axle body (8) and the front end (9, 10).

6. The axle assembly according to any one of the claims 1 to 5, **characterized in that** an axle journal (21, 22) each is rigidly fastened in two side openings of the axle body (8).

7. The axle assembly according to any one of the claims 1 to 5, **characterized in that** roller bearings for receiving a wheel hub part are provided in two side openings of the axle body (8).

## Revendications

1. Système d'essieu comprenant axe de véhicule muni d'un corps d'axe rigide, conçu par exemple sous la forme d'un tube d'axe (8), avec de chaque côté du plan médian longitudinal du véhicule une bielle de poussée (6, 7), laquelle est articulée par une première extrémité antérieure (9, 10) sur un point d'appui fixé au châssis et est reliée de façon rigide à distance de là avec le corps d'essieu (8), et laquelle forme dans la zone de son extrémité postérieure (17, 18) opposée à la première extrémité le logement inférieur d'un élément ressort sur la face supérieure duquel s'appuie le châssis du véhicule, **caractérisé en ce que** le corps d'axe (8) et les deux bielles de poussée (6, 7) sont formés ensemble à partir de deux demi-pièces réalisées chacune essentiellement en une pièce et reliées ensemble le long d'un joint de séparation (4) s'étendant par exemple dans un plan essentiellement horizontal, notamment par soudage, de telle sorte que le corps d'essieu (8) relie ensemble les deux bielles de poussée (6, 7) de façon rigide.

2. Système d'essieu selon la revendication 1, **caractérisé en ce que** les deux demi-pièces (2, 3) une fois reliées ensemble forment une cavité située entre elles.

3. Système d'essieu selon la revendication 1 ou 2, **caractérisé en ce que** pour relier les bielles de poussée (6, 7) au châssis du véhicule, un manchon de palier (11, 12) est réalisé ou installé, notamment soudé, à chaque extrémité antérieure (9, 10) des bielles de poussée (6, 7).

4. Système d'essieu selon l'une des revendications 1 à 3, **caractérisé en ce que** plusieurs trous traversants (19, 20) s'étendant essentiellement perpendiculairement au plan de séparation des demi-pièces (2, 3) sont prévus à chacune des extrémités postérieures (17, 18) des bielles de poussé (6, 7) afin de fixer des éléments ressort, notamment à chaque fois un soufflet d'amortisseur pneumatique sur les bielles de poussée (6, 7).

5. Système d'essieu selon l'une des revendications 1 à 4, **caractérisé en ce qu'**une ouverture de passage (13, 14) est prévue dans chaque bielle de poussé (6, 7) entre la zone reliée au corps d'essieu (8) et l'extrémité antérieure (9, 10).

6. Système d'essieu selon l'une des revendications 1 à 5, **caractérisé en ce qu'une** fusée d'essieu (21, 22) est fixée rigidement dans chaque ouverture latérale du corps d'essieu (8).

7. Système d'essieu selon l'une des revendications 1 à 5, **caractérisé en ce que** des paliers à rouleaux sont prévus dans les deux ouvertures latérales du corps d'essieu (8) pour la réception d'une partie d'un moyeu de roue.
